# EUROPÄISCHE PATENTSCHRIFT

(11) **EP 0 740 642 B1**
(45) Veröffentlichungstag und Bekanntmachung des Hinweises auf die Patenterteilung: **28.05.1997**
(21) Anmeldenummer: 95905532.8
(22) Anmeldetag: 11.01.1995
(51) Int. Cl.: C01B 31/08

(54) **VERFAHREN ZUR REGENERATION VON AKTIVKOHLE**
PROCESS FOR REGENERATING ACTIVATED CARBON
PROCEDE DE REGENERATION DE CHARBON ACTIF

(30) Priorität: 20.01.1994 DE 4401575
(43) Veröffentlichungstag der Anmeldung: 06.11.1996
(73) Patentinhaber: LEUNA RAFFINERIEGESELLSCHAFT mbH, 06236 Leuna (DE)
(72) Erfinder: SCHÜTT, Arnd-Hinrich, D-06217 Merseburg (DE); DOMMASCHK, Volker, D-06124 Halle (DE)
(74) Vertreter: Schinke, Herbert, Dr. Dr., Patentanwaltskanzlei
(86) Internationale Anmeldenummer: DE9500024
(87) Internationale Veröffentlichungsnummer: WO9519933

(56) Entgegenhaltungen:
- EP-A- 0 411 412
- DE-A- 3 030 967
- DE-A- 4 031 696
- DE-C- 407 085
- US-A- 5 124 292

## Beschreibung

### Technisches Gebiet

Die vorliegende Erfindung betrifft ein Verfahren zur Regeneration von A-Kohlen und ist anwendbar auf Kohlen, die zur Carbonylentfernung [Fe(CO)₅; Ni(CO)₄] aus stark H₂S-haltigen Gasen unter Ausschluß von Sauerstoff eingesetzt worden sind.

Sie dient dem Zweck, die beladene A-Kohle so zu regenerieren, daß ein erneuter Wiedereinsatz ohne merkliche Kapazitäts- und Qualitätsverluste möglich wird.

### Stand der Technik

Die in den unterschiedlichen Gasströmen auftretenden Metall-carbonyle, deren Entstehung bei Temperaturen zwischen 50 und 200 °C und durch hohe CO-Partialdrücke und natürlich durch die Anwesenheit der entsprechenden Metalle in hoher Konzentration und mit großer Oberfläche begünstigt wird, bereiten in nachgeschalteten Anlagen die unterschiedlichsten Probleme und müssen deswegen nach Möglichkeit aus den Gasströmen entfernt werden. Die meisten Verfahren zur Entfernung der Carbonyle beziehen sich nicht auf stark H₂S-haltige Gase, sondern werden zur Entfernung der Carbonyle aus anderen Gasströmen eingesetzt.

Zur Entfernung von Metallcarbonylen (Eisen + Nickelcarbonyle) aus H₂S-haltigen Gasen kann ein Verfahren Anwendung finden (EP 239 111), das den Gasstrom durch Hindurchleiten durch ein Absorptionsbett, das Zinksulfid oder ein Gemisch aus Zinksulfid und Zinkoxid enthält, reinigt. Dieses Verfahren erfordert aber H₂S-Gehalte kleiner 5 Vol.%, erhöhte Temperatur und ist hinsichtlich der Nickeltetracarbonylentfernung nicht leistungsfähig.

Es wurde auch vorgeschlagen, Clausgase, die einer Rectisolanlage zur Entfernung des Schwefelwasserstoff aus Synthesegasen entstammen, von den enthaltenen Carbonylen zu befreien, indem man das Clausgas nach der letzten Kühlstufe des Rectisolprozesses einer Nachwäsche mit carbonylfreiem kalten Methanol unterzieht, das Waschmethanol aufarbeitet und das aus dem gereinigten Clausgasstrom abgeschiedene Methanol aus dem Prozeß auskreist.

Dieses Verfahren erfordert eine zusätzliche Reinigungsstufe und ist immer an eine Rectisolanlage gebunden. Darüber hinaus kann durch die erforderliche intensive Vermischung des Clausgases mit dem Methanol ein beachtlicher Druckverlust auftreten, der eine erneute Verdichtung des Clausgases vor seiner Verarbeitung verlangt.
Die Entfernung der Carbonyle kann aufgrund der sich einstellenden absorptiven Gleichgewichte auch nur bis auf einige mg Carbonyle pro m³ i.N. Clausgas erfolgen, sollen die Waschmethanolmengen nicht zu groß werden.

Das Verfahren zur Beseitigung von Nickel- und Eisencarbonylen aus stark schwefelwasserstoffhaltigen Gasen durch Bindung der Carbonyle an A-Kohle bei Abwesenheit von Sauerstoff (DE 4031696) erfüllt die Anforderungen hinsichtlich der Carbonylreinheit problemlos, eine Regeneration der mit Carbonylen beladenen A-Kohle war bisher aber nicht möglich, und die Entsorgung der beladenen Kohle ist problematisch.

Meistens werden A-Kohlen durch Erwärmen und Hindurchleiten eines Schleppgases desorbiert (DE 3925399, US-P 5124292, DE 4026071), wobei oft auch direkt Dampf zum Erwärmen und als Schleppmittel Verwendung findet (DE 3030967, DE 3038715, EP 0244499).

In all diesen Fällen werden Adsorbate desorbiert, die einen bestimmten Dampfdruck haben und deswegen nach dieser Methode desorbierbar sind.

Bisher ist nur ein Verfahren zur Desorption von an A-Kohlen adsorbierten Schwermetallen bekannt (DE 2925399). Hier wird elementares Quecksilber, das ebenfalls einen bestimmten Dampfdruck hat und aus Rauchgasen einer Müllverbrennungsanlage stammt, bei 500 °C desorbiert.

Mit den bisher bekannten Verfahren ist es also nicht möglich, die aus den stark schwefelwasserstoffhaltigen Gasen an A-Kohlen adsorbierten Eisen- und Nickelcarbonyle, die sich während der Adsorptionsphase im wesentlichen in Sulfide umwandeln, von der eingesetzten A-Kohle zu desorbieren.

### Darstellung der Erfindung

Der im Anspruch 1 angegebenen Erfindung lag somit das Problem zugrunde, die Metallverbindungen von der bei der Carbonylentfernung aus stark schwefelwasserstoffhaltigen Gasen eingesetzten A-Kohle auf wirtschaftliche Weise zu desorbieren.

Die A-Kohle wird mit Stickstoff, dem immer mehr Luft zugemischt wird, beaufschlagt. Dieser Gasstrom wird danach durch einen reinen Luftstrom ersetzt. Anschließend erfolgt eine Dampfbehandlung.

Bei der Regeneration mit dem Stickstoff-Luft-Gemisch sowie der Luft wird die im Adsorber sich einstellende Temperatur zwischen 20 und 300 °C gehalten und die sich anschließende Behandlung mit Wasserdampf vorteilhafterweise bei Temperaturen zwischen 100 und 300 °C und Drücken von 0,1 bis 1,6 MPa durchgeführt.

Dabei wird die O₂-Konzentration von 0,5 Vol.% im Stickstoff-Luft-Gemisch schrittweise auf den Sauerstoffgehalt der Luft von etwa 21 Vol.% erhöht. Die Belastung der Aktivkohle mit dem Stickstoff-Luft-Gemisch bzw. der Luft beträgt zwischen 1 und 10 v/vh (v = Volumeneinheit) und während der Behandlung mit Wasserdampf 1 bis 2 g/gh.

Die bei der Regeneration anfallenden Desorptionsgase (Stickstoff-Luft-Gemisch, das Schwefelverbindungen enthält) können in die Nachbrennkammer einer Clausanlage, eine Schwefelverbrennung oder in ein Kraftwerk gegeben werden. Die während der Dampfbeaufschlagung anfallenden ebenfalls Schwefelverbindungen enthaltenden Dämpfe können kondensiert und einer Abwasseraufbereitung zugeführt werden.

Bei Anwendung des Verfahrens kann die zur adsorptiven Abtrennung der Carbonyle aus stark schwefelwasserstoffhaltigen Gasen eingesetzte Kohle beliebig oft regeneriert werden, wobei Adsorptionskapazität als auch -qualität vollständig erhalten bleiben.

Ein weiterer Vorteil des Verfahrens besteht in der geringfügigen Energieaufwendung während der Stickstoff-Luft-Behandlung und den niedrigen spezifischen Dampfverbrauchen während der In-situ-Regeneration.

Die Erfindung wird durch folgende Beispiele näher erläutert:

### Ausführungsbeispiele

### Beispiel 1

Etwa 1 kg einer Aktivkohle vom Typ SGR (ZnCl₂-imprägniert) wurde mit einem Gas nachfolgender Zusammensetzung

| | |
|---|---|
| H₂S (Vol.%) | 38 |
| CO₂ (Vol.%) | 52 |
| CO (Vol.%) | 5,5 |
| H₂ (Vol.%) | 4,4 |
| CH₃OH (Vol.%) | 0,1 |
| Ni(CO)₄ [mg/m³ i.N.] | 6 |
| Fe(CO)₅ [mg/m³ i.N.] | 20 |

zur Entfernung der Ni- und Fe-Carbonyle so lange belastet, bis am Ausgang der Aktivkohleschüttung die Carbonylkonzentration anstieg.

Mit Beginn der Regeneration der Aktivkohle wurde über die Kohleschüttung ein Stickstoffstrom geleitet, dem Luft in steigender Konzentration in Abhängigkeit von der Temperatur der Kohleschüttung zudosiert wurde.

Im betrachteten Beispiel befand sich die Temperaturmessung im oberen Drittel der Kohleschüttung. Die N₂-Menge (O₂-Gehalt max. 0,5 Vol.%) betrug zunächst 2 v/vh (2 l N₂/l A-Kohle).

Dabei stieg die Temperatur während 5 Stunden auf 35 °C. Danach wurden dem N₂-Strom 5 Vol.% Luft zudosiert. Die Temperatur stieg während 2 Stunden auf 100 °C an. In einem weiteren Schritt wurden 10 Vol.% Luft zudosiert, wodurch die Temperatur der A-Kohle auf 150 °C stieg und danach wieder sank. In einem 3. Schritt wurde die N₂/Luft-Strömung durch Luft mit einer Belastung von 2 v/vh ersetzt. Dabei stieg die Temperatur nur noch geringfügig auf 155 °C an. Die Luftströmung wurde für 5 Stunden auf-aufrechterhalten. Dabei fiel die Temperatur auf 80 °C.

Anschließend wurde die Aktivkohle mit Wasserdampf bei Normaldruck durchströmt. Die Dampftemperatur betrug 180 °C, die Belastung 1,0 g/gh. Die Regeneration wurde so lange durchgeführt, bis im kondensierten Dampf am Ausgang des Adsorbers der pH-Wert von zunächst 2 auf 7 angestiegen war. Es folgte eine Trocknung mit Luft und Inertisierung mit Stickstoff.

Nach der Regeneration besaß die Aktivkohle die gleiche Adsorptionsaktivität und -kapazität wie im frischen Zustand.

### Beispiel 2

Eine nichtimprägnierte Aktivkohle wurde unter den gleichen Bedingungen wie im Beispiel 1 beladen und regeneriert. Nach dieser Behandlung besaß die nichtimprägnierte Aktivkohle die gleiche Aktivität wie die imprägnierte Aktivkohle.

### Beispiel 3

Nach einer Beladung der Aktivkohle, wie im Beispiel 1 beschrieben, erfolgte die 1. Phase der Regeneration dergestalt, daß die Aktivkohle zunächst wie im Beispiel 1 mit 2 v/vh N₂ (technisch) beaufschlagt wurde.

Danach wurden dem N₂-Strom 20 Vol.% Luft zugemischt. Die Temperatur der A-Kohle stieg hierdurch auf etwa 170 °C. Die abschließende reine Luftströmung (2 v/vh) brachte keine weitere Temperaturerhöhung.

Die 2. Phase der Regeneration mit H₂O-Dampf wurde analog Beispiel 1, jedoch bei 200 °C durchgeführt.

Adsorptionsaktivität und -kapazität der regenerierten Aktivkohle entsprachen den Eigenschaften der frischen Kohle.

## Patentansprüche

1. Verfahren zur Regeneration von bei der Carbonylentfernung aus stark schwefelwasserstoffhaltigen Gasen eingesetzter beladener Aktivkohle, dadurch gekennzeichnet, daß durch diese Aktivkohle zunächst ein Stickstoffstrom geleitet wird, dem stufenweise in steigender Konzentration und in Abhängigkeit von der Temperatur der Kohleschüttung Luft zudosiert wird, und danach der Stickstoff-Luft-Strom durch einen reinen Luftstrom ersetzt wird, wobei bei einer Belastung der Aktivkohle mit dem Stickstoff-Luft-Gemisch sowie anschließend nur mit Luft im Bereich von 1 bis 10 v/vh die Temperatur der Aktivkohle zwischen 20 und 300 °C gehalten wird bis keine Wärmeentwicklung mehr festzustellen ist, danach eine Spülung der Aktivkohle mit Wasserdampf bei einer Belastung von 1 bis 2 g/gh erfolgt bis im kondensierten Dampf am Ausgang der Kohleschüttung ein pH-Wert von 7 erreicht ist und abschließend mit Luft getrocknet und mit Stickstoff inertisiert wird.

2. Verfahren nach Anspruch 1, dadurch gekennzeichnet, daß während der Dampfspülung die Temperatur in der Aktivkohle zwischen 100 und 300 °C eingestellt wird.

3. Verfahren nach Anspruch 1 und 2, dadurch gekennzeichnet, daß der Druck während des Dampfspülens zwischen 0,1 und 1,6 MPa eingestellt wird.

4. Verfahren nach Anspruch 1 bis 3, dadurch gekennzeichnet, daß die Regeneration in-situ erfolgt.

## Claims

1. Process for the regeneration of loaded activated carbon employed in the removal of carbonyl from gases with a high hydrosulphide content; characterised by first passing a nitrogen flow through said activated carbon, to which air is gradually admixed with increasing concentration and in relation to the temperature of the carbon layer, and subsequently substituting the nitrogen-air flow by a pure air flow with the special feature that, while the activated carbon is charged with the nitrogen-air mixture which is subsequently replaced by pure air in the range from 1 to 10 v/vh, the temperature of the activated carbon is kept between 20 C° and 300 C° until there is no more heat generation observed, this will be followed by backwashing the activated carbon with water vapour at a load of 1 to 2 g/gh until the condensed vapour at the outlet side of the carbon layer will have reached a pH value of 7; and subsequently drying the activated carbon with air and inerting the carbon with nitrogen.

2. A process in accordance with Claim (1), wherein, the temperature in the activated carbon layer is adjusted in a range between 100 C° and 300 C° while backwashing with vapour.

3. A process in accordance with Claims (1) and (2), wherein, pressure is adjusted in a range between 0.1 and 1.6 MPa while backwashing with vapour.

4. A process in accordance with Claims (1 ) to (3), wherein, the regeneration is carried out as an in-situ process.

## Revendications

1. Procédé de régénération de charbon actif chargé et utilisé lors de l'élimination de carbonyle contenu dans les gaz de grande teneur en acide sulfhydrique, procédé caractérisé par le fait qu'un flux d'azote est d'abord conduit à travers le charbon actif. L'addition dosée d'air à ce flux s'effectue sous forme d'une concentration croisante par étapes et en fonction de la température du déchargement du charbon.
Le flux d'air et d'azote est ensuite remplacé par un flux d'air pur. En chargeant le charbon actif d'un mélange d'air et d'azote et ensuite d'air seulement dans la plage de 1 à 10 V/Vh, la température du charbon actif est maintenue entre 20° et 300°C jusqu'à ce qu'un dégagement de chaleur ne puisse plus être constaté. Rincer ensuite le charbon actif à la vapeur d'eau sous une charge de 1 à 2 g/gh jusqu'à ce qu'le pH de la vapeur condensée soit de 7 à la sortie du déchargement de charbon. Le charbon actif est ensuite séché à l'air et rendu inerte à l'aide de l'azote.

2. Procédé conformément à la spécification 1, caractérisé par le fait que la température dans le charbon actif est réglée entre 100 et 300 °C au cours du rinçage à l'aide de la vapeur.

3. Procédé conformément aux spécifications 1 et 2, caractérisé par le fait que la pression est réglée entre 0,1 et 1,6 Mpa au cours du rinçage à l'aide de la vapeur.

4. Procédé conformément aux spécifications 1 à 3, caractérisé par le fait que la régénération s'effectue in situ.
